# EUROPEAN PATENT APPLICATION

(11) **EP 3 709 409 A1**
(43) Date of publication of application: **16.09.2020**
(21) Application number: 18874897.4
(22) Date of filing: 05.11.2018
(51) Int. Cl.: H01M 4/86

(54) **MICROPOROUS LAYER STRUCTURE OF FUEL CELL AND PREPARATION METHOD THEREFOR, AND FUEL CELL CATHODE ASSEMBLY**

(30) Priority: 06.11.2017 CN 201711078816; 06.11.2017 CN 201721467506 U
(71) Applicant: CRRC Qingdao Sifang Co., Ltd., Qingdao City, Shandong 266111 (CN)
(72) Inventor: WAN, Nianfang, Shandong 266111 (CN); LIANG, Jianying, Shandong 266111 (CN); LI, Kelei, Shandong 266111 (CN); ZHANG, Wenchao, Shandong 266111 (CN); ZHANG, Xu, Shandong 266111 (CN)
(74) Representative: Prinz & Partner mbB
(86) International application number: PCT/CN2018/113914
(87) International publication number: WO 2019/086024

(57) **Abstract**

The present invention provides a microporous layer structure of a fuel cell, comprising: a microporous layer having high water vapor transmission rate and a microporous layer having low water vapor transmission rate that are sequentially stacked. In the direction of an air flow path, the thickness of the microporous layer having high water vapor transmission rate increases progressively, the thickness of the microporous layer having low water vapor transmission rate decreases progressively, and the total thickness of the microporous layer structure keeps consistent. At an air inlet, the thickness of the microporous layer having high water vapor transmission rate is smaller than that of the microporous layer having low water vapor transmission rate. At an air outlet, the thickness of the microporous layer having high water vapor transmission rate is greater than that of the microporous layer having low water vapor transmission rate. The present application also provides a preparation method for the microporous layer structure and a membrane electrode assembly of a fuel cell. The microporous layer structure of a fuel cell provided in the present application can balance water content of a gas inlet area and a gas outlet area of the fuel cell, and finally improves the stability of the fuel cell at different temperatures and humidity levels, thereby implementing functions such as improving durability.

## Description

The present application claims the priority to Chinese Patent Application No. 201711078816.6, titled "MICROPOROUS LAYER STRUCTURE OF FUEL CELL AND PREPARATION METHOD THEREFOR, AND FUEL CELL CATHODE ASSEMBLY", filed on November 6, 2017 with the Chinese Patent Office, and the priority to Chinese Patent Application No. 201721467506.9, titled "MICROPOROUS LAYER STRUCTURE OF FUEL CELL AND FUEL CELL CATHODE ASSEMBLY", filed on November 6, 2017 with the Chinese Patent Office, which are incorporated herein by reference in their entireties.

### FIELD

The present disclosure relates to the technical field of fuel cells, and in particular to a membrane electrode assembly of a fuel cell and a method for preparing the membrane electrode assembly of a fuel cell.

### BACKGROUND

Fuel cells have broad development prospects in fields of transportation, backup power supply and distributed power station due to their advantages of high energy conversion efficiency, low emission and no pollution. A typical fuel cell unit consists of an electrolyte membrane (which is a proton exchange membrane generally), a catalytic electrode for a cathode and an anode, a gas diffusion layer and a bipolar plate. A gas diffusion medium in the fuel cell is usually made of a conductive porous substrate such as carbon fiber paper or carbon cloth, and a microporous layer is attached to the gas diffusion medium. The microporous layer usually includes carbon powder and hydrophobic fluoropolymer, and has functions of drainage, ventilation and enhancing electron transport. The microporous layer plays an important role in water management in the fuel cell.

The water management in the fuel cell is very important. A shortage of water may result in a high proton transport impedance of the electrolyte membrane and low activity of an electrode, thereby resulting in a low power output. High water content may result in flooding of the electrode and high transport resistance to oxygen gas and fuel, thereby also resulting in performance reduction. Due to having a relatively high power output of a vehicle fuel cell, an electrode of the vehicle fuel cell generally has a large area up to hundreds of square centimeters. For a fuel cell, especially a fuel cell with a large size, imbalance of water content in a membrane electrode, relative humidity of the gas and oxygen concentration in different areas of the electrode may result in an imbalance distribution of current density, which may affect power density and durability.

Generally, at an inlet of the fuel cell, the air is relatively dry and oxygen partial pressure is high. At an outlet of the fuel cell, the air is relatively humid and the oxygen partial pressure is low. Such an imbalance may be aggravated at different operating temperatures. For example, the shortage of water may occur at a high temperature and a flooding may occur at a low temperature. In order to increase relative humidity of the air at the inlet, the air is generally pre-humidified by a humidifier before being introduced into a fuel cell stack. The humidifier is generally large in size, which increases a system volume and system weight. Furthermore, the problem of imbalance distribution of water and oxygen at different areas in the fuel cell, especially in the fuel cell with a large size, cannot be solved by a humidifier.

Chinese Patent Application No. 201110293005.4 provides an electrode of a fuel cell with gradient performance and a method for preparing the same. First, at least two electrode slurry mixtures having different components are prepared. The at least two electrode slurry mixtures are deposited on a substrate of the gas diffusion layer to form at least two electrode layers, which are combined to form a combined electrode such that an average performance of the combined electrode layer varies with the substrate. The performance includes a membrane equivalent weight, gas permeability of a diffusion medium, a ratio of ionomer to carbon, a catalyst loading, porosity, or a combination thereof.

US8945790 provides a microporous layer structure, which has hydrophilic pores, hydrophobic pores, and boreholes. The hydrophilic pores and the hydrophobic pores each has a complex diameter ranging from 0.02 micrometers to 0.5 micrometers and the boreholes each has a complex diameter ranging from 0.5 micrometers to 100 micrometers. The hydrophilic pores increase water storage capability, such that water content of the membrane under a dry and high temperature condition can be increased. Further, the hydrophilic pores increase a phase transportation point from liquid to gas, which facilitates heat dissipation. The hydrophobic pores mimic secondary pores in a catalytic layer, thereby facilitating transport of reaction gas and water vapor. The boreholes facilitate transport of liquid water through a capillary force.

In the above solutions, either a complicated preparation process or a large number of to-be-controlled parameters is involved, which is adverse to mass production, or, the improvement of water management of the fuel cell is poor, thereby affecting performance of the fuel cell.

### SUMMARY

In order to solve the technical problem of imbalance distribution of water and oxygen at different areas in a fuel cell, especially in a fuel cell with a large size in the prior art, a microporous layer structure with better water management performance is provided according to the present disclosure, so as to improve stability of the fuel cell at various humidity conditions and improve durability.

In view of this, a microporous layer structure of a fuel cell is provided according to the present disclosure. The microporous layer structure comprises a microporous layer having high water vapor permeability and a microporous layer having low water vapor permeability that are sequentially stacked; in the direction of air flow, the thickness of the microporous layer having high water vapor permeability increases progressively, the thickness of the microporous layer having low water vapor permeability decreases progressively, and the microporous layer structure has a uniform total thickness. At the air inlet, the microporous layer having high water vapor permeability is thinner than the microporous layer having low water vapor permeability; at an air outlet, the microporous layer having high water vapor permeability is thicker than the microporous layer having low water vapor permeability.

Preferably, the thickness of the microporous layer structure ranges from 30µm to 60µm.

Preferably, the microporous layer having high water vapor permeability has a thickness ranging from 0µm to 30µm at the air inlet and has a thickness ranging from 30µm to 60µm at the air outlet; the microporous layer having low water vapor permeability has a thickness ranging from 30µm to 60µm at the air inlet and has a thickness ranging from 0µm to 30µm at the air outlet.

Preferably, the microporous layer having high water vapor permeability has a porosity ranging from 40% to 55%, preferably ranging from 45% to 55%; the microporous layer having low water vapor permeability has a porosity ranging from 30% to 45%, preferably ranging from 30% to 40%.

The present disclosure further provides a method for preparing the microporous layer structure of a fuel cell, which comprises steps:
A), preparing a first slurry mixture and a second slurry mixture, wherein the first slurry mixture and the second slurry mixture each consists of carbon powder, adhesive agent, dispersant and solvent, wherein water vapor permeability of the first slurry mixture is higher than that of the second slurry mixture; and
B), coating on surface of a gas diffusion layer subjected to hydrophobic treatment with the first slurry mixture to obtain the microporous layer having high water vapor permeability after heat treatment, then coating with the second slurry mixture to obtain the microporous layer having low water vapor permeability; or
coating on surface of a gas diffusion layer subjected to hydrophobic treatment with the second slurry mixture to obtain the microporous layer having low water vapor permeability after heat treatment, then coating with the first slurry mixture to obtain the microporous layer having high water vapor permeability, wherein
by controlling coating process, in the direction of air flow, the thickness of the microporous layer having high water vapor permeability increases progressively, the thickness of the microporous layer having low water vapor permeability decreases progressively, and the microporous layer structure has a uniform total thickness;
at the air inlet, the microporous layer having high water vapor permeability is thinner than the microporous layer having low water vapor permeability; and
at the air outlet, the microporous layer having high water vapor permeability is thicker than the microporous layer having low water vapor permeability.

Preferably, the carbon powder in the first slurry mixture is large particle carbon powder with a particle size ranging from 30nm to 60nm, preferably ranging from 40nm to 60nm, and more preferably ranging from 45nm to 60nm; the carbon powder in the second slurry mixture is small particle carbon powder with a particle size ranging from 20nm to 50nm, preferably ranging from 20nm to 45nm, and more preferably ranging from 20nm to 40nm.

Preferably, the coating tool for performing the coating process is a coater with a slit or a spray head, or a scraper.

The present disclosure further provides a membrane electrode assembly of a fuel cell, which comprises an electrolyte membrane, a catalytic electrode layer, a microporous layer and a gas diffusion layer that are sequentially stacked., wherein the microporous layer has the above described microporous layer structure or the microporous layer structure prepared by the above described method.

Preferably, the microporous layer having high water vapor permeability of the microporous layer structure is arranged on a side of the gas diffusion layer.

Preferably, the microporous layer comprises at least one layer.

The present disclosure provides a microporous layer structure, comprising: a microporous layer having high water vapor permeability and a microporous layer having low water vapor permeability that are sequentially stacked, wherein in the direction of air flow, the thickness of the microporous layer having high water vapor permeability increases progressively, and the thickness of the microporous layer having low water vapor permeability decreases progressively, and the microporous layer structure has a uniform total thickness; at an air inlet, the microporous layer having high water vapor permeability is thinner than the microporous layer having low water vapor permeability; and at an air outlet, the microporous layer having high water vapor permeability is thicker than the microporous layer having low water vapor permeability. At the air inlet, due to water retention function of the microporous layer having low water vapor permeability, water is difficult to escape through the microporous layer, thereby increasing water content at the air inlet and reducing requirement for air pre-humidifying. At the air outlet, due to a high proportion of the microporous layer having high water vapor permeability, water easily escapes through the microporous layer, thereby reducing flooding and ensuring transport of oxygen. In this way, the water management can be improved by adjusting gradient distribution of the microporous layer, thereby facilitating uniform distribution of current density, improving stability of the fuel cell under various temperature and humidity conditions and improving durability.

### BRIEF DESCRIPTION OF THE DRAWINGS

Figure 1 shows a microporous layer structure of a fuel cell according to the present disclosure;
Figure 2 is a schematic diagram showing comparison of performances of a cell formed by a microporous layer structure prepared according to an example of the present disclosure under a low humidity condition; and
Figure 3 is a schematic diagram showing comparison of performances of a cell formed by a microporous layer structure prepared according to an embodiment of the present disclosure under a high humidity condition.

### DETAILED DESCRIPTION OF EMBODIMENTS

For a further understanding of the present disclosure, preferred embodiments of the present disclosure are described below in conjunction with examples. However, it should be understood that these descriptions are only for further describing features and advantages of the present disclosure rather than limiting the claims of the present disclosure.

In view of the problem of poor water management in a fuel cell in the prior art, a microporous layer structure of a fuel cell is provided according to the present disclosure. The microporous layer structure comprises microporous layers having different water vapor permeabilities. In a direction of air flow, each single layer of the microporous layer has a gradient distribution of thickness and the microporous layer has a uniform total thickness. At the air inlet, the microporous layer having low water vapor permeability is thicker than the microporous layer having high water vapor permeability. At an air outlet, the microporous layer having low water vapor permeability is thinner than the microporous layer having high water vapor permeability. The microporous layer structure according to the present disclosure can balance water content of a fuel cell at the air inlet and the air outlet, thus distribution of current density of a fuel cell with a big size can be improved, stability of the fuel cell under various temperature and humidity conditions can be improved, and durability can be improved. Specifically, the present disclosure provides a microporous layer structure of a fuel cell, comprising: a microporous layer having high water vapor permeability and a microporous layer having low water vapor permeability that are sequentially stacked, wherein in the direction of air flow, the thickness of the microporous layer having high water vapor permeability increases progressively, and the thickness of the microporous layer having low water vapor permeability decreases progressively, and the microporous layer structure has a uniform total thickness; at an air inlet, the microporous layer having high water vapor permeability is thinner than the microporous layer having low water vapor permeability; and at an air outlet, the microporous layer having high water vapor permeability is thicker than the microporous layer having low water vapor permeability.

The present disclosure provides a microporous layer structure of a fuel cell with a gradient variation, consisting of a microporous layer having high water vapor permeability and a microporous layer having low water vapor permeability. In actual application, the microporous layer having high water vapor permeability and the microporous layer having low water vapor permeability form a set and the microporous layer structure may comprises one or more sets, which is not limited herein. In the direction of air flow, that is, a direction from the air inlet to the air outlet, the thickness of the microporous layer having high water vapor permeability increases in a gradient manner, and the thickness of the microporous layer having low water vapor permeability decreases in a gradient manner. Though thicknesses of the microporous layer having high water vapor permeability and the thickness of the microporous layer having low water vapor permeability both change in a gradient manner, the microporous layer structure has a uniform total thickness in the direction of air flow. The gradient distribution in progressively increasing thickness or progressively decreasing thickness of the microporous layer can make water more uniformly distributed in the direction from the air inlet to the air outlet, and the effect is better.

In specific embodiments, the thickness of the microporous layer structure ranges from 30µm to 60µm. Specifically, the microporous layer having high water vapor permeability has a thickness ranging from 0µm to 30µm at the air inlet and has a thickness ranging from 30µm to 60µm at the air outlet. In an specific embodiment, the microporous layer having high water vapor permeability has a thickness ranging from 10µm to 20µm at the air inlet and has a thickness ranging from 30µm to 50µm at the air outlet; the microporous layer having low water vapor permeability has a thickness ranging from 30µm to 60µm at the air inlet and has a thickness ranging from 0µm to 30µm at the air outlet. In specific embodiments, the microporous layer having low water vapor permeability has a thickness ranging from 30µm to 50µm at the air inlet and has a thickness ranging from 10µm to 20µm at the air outlet.

The microporous layer having high water vapor permeability described herein is relative to the microporous layer having low water vapor permeability. The microporous layer having high water vapor permeability means that water easily escapes therethrough and the microporous layer having low water vapor permeability means that water is difficult to escape therethrough. Specifically, the water vapor permeability may be adjusted by adjusting porosity and density of the microporous layer having high water vapor permeability and the microporous layer having low water vapor permeability. Specifically, the porosity of the microporous layer having high water vapor permeability ranges from 40% to 55%, and preferably ranges from 45% to 55%; the porosity of the microporous layer having low water vapor permeability ranges from 30% to 45%, and preferably ranges from 30% to 40%.

The present disclosure further provides a method for preparing the microporous layer structure of a fuel cell, comprising the following steps:
A), preparing a first slurry mixture and a second slurry mixture, wherein the first slurry mixture and the second slurry mixture each consists of carbon powder, adhesive agent, dispersant and solvent, wherein water vapor permeability of the first slurry mixture is higher than that of the second slurry mixture; and
B), coating on surface of a gas diffusion layer subjected to hydrophobic treatment with the first slurry mixture to obtain the microporous layer having high water vapor permeability after heat treatment, then coating with the second slurry mixture to obtain the microporous layer having low water vapor permeability; or
coating on surface of a gas diffusion layer subjected to hydrophobic treatment with the second slurry mixture to obtain the microporous layer having low water vapor permeability after heat treatment, then coating with the first slurry mixture to obtain the microporous layer having high water vapor permeability, wherein
by controlling coating process, in the direction of air flow, the thickness of the microporous layer having high water vapor permeability increases progressively, the thickness of the microporous layer having low water vapor permeability decreases progressively, and the microporous layer structure has a uniform total thickness;
at the air inlet, the microporous layer having high water vapor permeability is thinner than the microporous layer having low water vapor permeability; and
at the air outlet, the microporous layer having high water vapor permeability is thicker than the microporous layer having low water vapor permeability.

In a process of preparing the microporous layer structure, two slurry mixtures are firstly prepared, which are distinguished into a first slurry mixture and a second slurry mixture. The first slurry mixture and the second slurry mixture each may consist of carbon powder, adhesive agent, dispersant and solvent. The carbon powder, adhesive agent, dispersant and solvent are well known to those skilled in the art, and are not limited herein. In the present disclosure, the water vapor permeability of the first slurry mixture is greater than that of the second slurry mixture. In order to achieve this, the carbon powder in the first slurry mixture may be large particle carbon powder with a particle size ranging from 30nm to 60nm, preferably ranging from 40nm to 60nm, and more preferably ranging from 45nm to 60nm; and in some specific embodiments, the particle size ranges from 40nm to 50nm, which leads to high porosity and low density of the microporous layer having high water vapor permeability. The carbon powder in the second slurry mixture may be small particle carbon powder with a particle size ranging from 20nm to 50 nm, preferably ranging from 20nm to 45nm, and more preferably ranging from 20nm to 40nm; and in some specific embodiments, the particle size ranges from 30nm to 40nm, which leads to low porosity and high density of the microporous layer having low water vapor permeability. Similarly, the adhesive agent in the first slurry mixture may be reduced to change contact angles of pores in the microporous layer so as to increase the water vapor permeability, and the adhesive agent in the second slurry mixture may be increased so as to reduce the water vapor permeability.

Then, the surface of the gas diffusion layer subjected to hydrophobic treatment is coated with the first slurry mixture, after heat treatment, the microporous layer having high water vapor permeability after heat treatment is obtained, then coated with the second slurry mixture, to obtain the microporous layer having low water vapor permeability. Alternatively, the surface of the gas diffusion layer subjected to hydrophobic treatment is coated with the second slurry mixture, after heat treatment, the microporous layer having low water vapor permeability is obtained, then coated with the first slurry mixture, to obtain the microporous layer having high water vapor permeability. In the present disclosure, by controlling the coating process, the microporous layer having high water vapor permeability and the microporous layer having low water vapor permeability meet requirements for the above microporous layer structure. Specifically, in a coating process, a coating tool may be a scraper, or a coater with a slit, or a coater with a spray head. In the case of using a scraper, the thickness gradient may be controlled by changing heights of two ends of the scraper. For example, the microporous layer having high water vapor permeability can be coated by making the scraper on one end higher than the other end. The inclination direction of the scraper is changed when coating the second slurry mixture, which is opposite to that when coating the first slurry mixture. In this way, the two microporous layers prepared have a uniform total thickness. In the case of using a coater with a slit, coating thicknesses of different slurry mixtures may be controlled by adjusting the slit at one end to be wider than that at the other end.

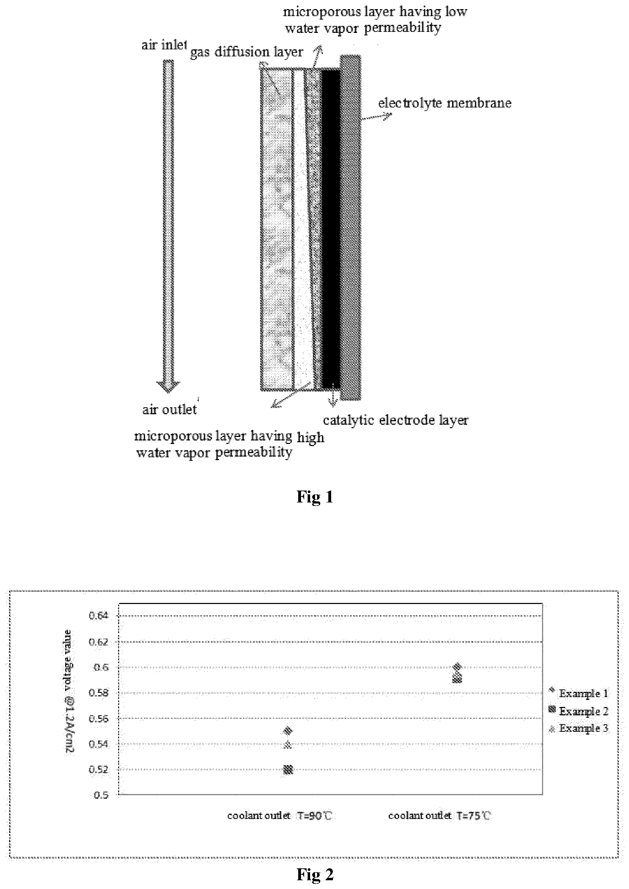

The present disclosure further provides a membrane electrode assembly of a fuel cell, comprising an electrolyte membrane, a catalytic electrode layer, a microporous layer and a gas diffusion layer that are sequentially stacked. The microporous layer has the above described microporous layer structure. The microporous layer having high water vapor permeability of the microporous layer structure is arranged on a side of the gas diffusion layer. Reference is made to Figure 1, which shows a cathode assembly of a fuel cell. A cathode structure and a microporous layer structure of the fuel cell can be seen clearly from Figure 1. In the present disclosure, the microporous layer having high water vapor permeability may be arranged on the side of the gas diffusion layer. Similarly, the microporous layer having low water vapor permeability may be arranged on the side of the gas diffusion layer. In a specific embodiment, the microporous layer having high water vapor permeability is arranged on the side of the gas diffusion layer.

In the present disclosure, the microporous layer may comprise multiple layers based on actual requirements, which is not limited herein.

In order to further understand the present disclosure, the microporous layer structure according to the present disclosure will be described in detail below with reference to examples. The protection scope of the present disclosure is not limited by the following examples.

### Example 1

A first dispersion liquid consisting of carbon powder A, polytetrafluoroethylene emulsion, deionized water and a surfactant was subjected to ultrasonic dispersion and mechanical agitation, to form a uniform slurry, which was coated on the side of the gas diffusion layer. The coating tool was a coater with a scraper. The thickness gradient from the air inlet to the air outlet was formed by changing the height of the scraper at both ends. In this way, the side of the scraper at the air inlet was lower than the other side of the scraper at the air outlet, such that the slurry applied on the side at the air inlet was thinner than that applied on the other side at the air outlet. A first layer, that is microporous layer having high water vapor permeability was formed after heat treatment, which had a gradient distribution of thickness from the air inlet to the air outlet. The thickness at the air inlet was 10µm, which was less than the thickness of 30µm at the air outlet.

A second dispersion liquid consisting of carbon powder B, polytetrafluoroethylene emulsion, deionized water and a surfactant was subjected to ultrasonic dispersion and mechanical agitation, to form a uniform slurry for the microporous layer, which was coated on the surface of the first microporous layer. The coating tool was a coater with a scraper. The thickness gradient from the air inlet to the air outlet was formed by changing the height of the scraper at both ends. In this way, the side of the scraper at the air inlet was higher than the other side of the scraper at the air outlet, such that the slurry applied on the side at the air inlet was thicker than that applied on the other side at the air outlet. A second layer, that is microporous layer having low water vapor permeability was formed after heat treatment, which had a gradient distribution of thickness from the air inlet to the air outlet. The thickness at the air inlet was 30µm, which was higher than the thickness of 10µm at the air outlet. By adjusting an inclination angle of the scraper to be reverse or consistent from the air inlet to the air outlet when coating the first layer and the second layer of the microporous layer, the total thickness of the first layer and the second layer of the microporous layer was kept to be uniform 40µm. The carbon powder A used had an average particle size of 50nm, which was larger than the average particle size of 30nm of the carbon powder B.

### Example 2

A first dispersion liquid consisting of carbon powder A, polytetrafluoroethylene emulsion, deionized water and a surfactant was subjected to ultrasonic dispersion and mechanical agitation, to form a uniform slurry for the microporous layer, which was coated on the side of the gas diffusion layer. The coating tool was a coater with a scraper. In this way, the side of the scraper at the air inlet was as high as the other side of the scraper at the air outlet, such that a microporous layer having high water vapor permeability with uniform thickness was formed after heat treatment. The thickness of the microporous layer was equal to the total thickness of the two microporous layers in Example 1, i.e., 40µm.

### Example 3

A second dispersion liquid consisting of carbon powder B, polytetrafluoroethylene emulsion, deionized water and a surfactant was subjected to ultrasonic dispersion and mechanical agitation, to form a uniform slurry for the microporous layer, which was coated on the side of the gas diffusion layer. The coating tool was a coater with a scraper. In this way, the side of the scraper at the air inlet was as high as the other side of the scraper at the air outlet, such that a microporous layer having low water vapor permeability with uniform thickness was formed after heat treatment. The thickness of the microporous layer was equal to the total thickness of the two microporous layers in Example 1, i.e., 40µm.

In Example 1, composite microporous layers with different thickness were prepared by using two kinds of carbon powders, which was respectively used in Example 2 and Example 3. The particle size of the carbon powder A was greater than that of the carbon powder B, so that the microporous layers prepared respectively with the carbon powder A and the carbon powder B have different pore distributions and porosities.

Water vapor permeability K relates to porosity, average pore size dₚₒᵣₑ and tortuosity ε of the pore, that is, dₚₒᵣₑ = (K/ηε)^{0.5}. In addition, capillary force P_{c} of pores in the microporous layer relates to the difference between gas pressure and liquid pressure, that is, P_{c} = (Pₗ-P_{g})∝σ/dₚₒᵣₑ, wherein σ represents surface energy. For a small pore size dₚₒᵣₑ, hydrostatic pressure of the pores is high, thus liquid water is difficult to flow into the pores, resulting in a low water vapor permeability. Based on the above formulas and theoretical analysis, the microporous layer prepared with the carbon powder with large particles has large porosity and large average pore size, thereby having a high water vapor permeability.

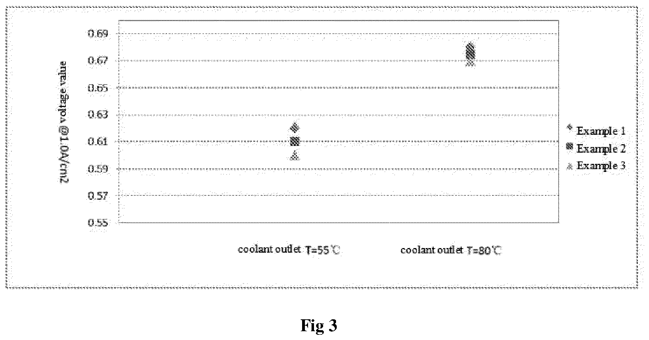

The microporous layers prepared in Example 1 to Example 3 were assembled to form a cathode of a fuel cell, and the performance of the fuel cell was tested. The testing conditions for data shown in Figure 2 includes: inlet pressure of 200KPa of the cathode, inlet RH of 30% of an anode, inlet RH of 42% of the cathode, and a stoichiometric ratio of 0.2 of the anode to the cathode. As shown in Figure 2, the microporous layer had an EMA with gradient performance. At 90 °C, the fuel cell showed higher performance of about 30mV. At 75 °C, the fuel cell showed similar performance. The testing conditions for data shown in Figure 3 includes: inlet pressure of 200KPa of the cathode, inlet RH of 100% of the anode, inlet RH of 100% of the cathode, and a stoichiometric ratio of 2.0 of the anode to the cathode. As shown in Figure 3, the microporous layer had an EMA with gradient performance. At 55 °C, the fuel cell showed a higher performance of about 20mV. At 80 °C, the fuel cell showed a higher performance of about 10mV.

The above description of the examples is only used to facilitate understanding of the method and core concept of the present disclosure. It should be noted that for those skilled in the art, various improvements and modifications may be made without departing from the principle of the present disclosure, and these improvements and modifications should fall within the scope of protection of the present disclosure.

Based on the above description of the disclosed embodiments, those skilled in the art can implement or carry out the present disclosure. It is apparent for those skilled in the art to make many modifications to these embodiments. The general principle defined herein may be applied to other embodiments without departing from the spirit or scope of the present disclosure. Therefore, the present disclosure is not limited to the embodiments illustrated herein, but should be defined by the widest scope consistent with the principle and novel features disclosed herein.

## Claims

1. A microporous layer structure of a fuel cell, comprising:
a microporous layer having high water vapor permeability and a microporous layer having low water vapor permeability that are sequentially stacked, wherein
in the direction of air flow, the thickness of the microporous layer having high water vapor permeability increases progressively, and the thickness of the microporous layer having low water vapor permeability decreases progressively, and the microporous layer structure has a uniform total thickness;
at an air inlet, the microporous layer having high water vapor permeability is thinner than the microporous layer having low water vapor permeability; and
at an air outlet, the microporous layer having high water vapor permeability is thicker than the microporous layer having low water vapor permeability.

2. The microporous layer structure according to claim 1, wherein the thickness of the microporous layer structure ranges from 30µm to 60µm.

3. The microporous layer structure according to claim 1, wherein
the microporous layer having high water vapor permeability has a thickness ranging from 0µm to 30µm at the air inlet and has a thickness ranging from 30µm to 60µm at the air outlet; and
the microporous layer having low water vapor permeability has a thickness ranging from 30µm to 60µm at the air inlet and has a thickness ranging from 0µm to 30µm at the air outlet.

4. The microporous layer structure according to claim 1, wherein
the microporous layer having high water vapor permeability has a porosity ranging from 40% to 55%; and
the microporous layer having low water vapor permeability has a porosity ranging from 30% to 45%.

5. A method for preparing the microporous layer structure according to claim 1, comprising:
A), preparing a first slurry mixture and a second slurry mixture, wherein the first slurry mixture and the second slurry mixture each consists of carbon powder, adhesive agent, dispersant and solvent, wherein water vapor permeability of the first slurry mixture is higher than that of the second slurry mixture; and
B), coating on surface of a gas diffusion layer subjected to hydrophobic treatment with the first slurry mixture to obtain the microporous layer having high water vapor permeability after heat treatment, then coating with the second slurry mixture to obtain the microporous layer having low water vapor permeability; or
coating on surface of a gas diffusion layer subjected to hydrophobic treatment with the second slurry mixture to obtain the microporous layer having low water vapor permeability after heat treatment, then coating with the first slurry mixture to obtain the microporous layer having high water vapor permeability, wherein
by controlling coating process, in the direction of air flow, the thickness of the microporous layer having high water vapor permeability increases progressively, the thickness of the microporous layer having low water vapor permeability decreases progressively, and the microporous layer structure has a uniform total thickness;
at the air inlet, the microporous layer having high water vapor permeability is thinner than the microporous layer having low water vapor permeability; and
at the air outlet, the microporous layer having high water vapor permeability is thicker than the microporous layer having low water vapor permeability.

6. The method according to claim 5, wherein
the carbon powder in the first slurry mixture is large particle carbon powder with a particle size ranging from 30nm to 60nm; and
the carbon powder in the second slurry mixture is small particle carbon powder with a particle size ranging from 20nm to 50nm.

7. The method according to claim 5, wherein a coating tool for performing the coating process is a coater with a slit or a spray head, or a scraper.

8. A membrane electrode assembly of a fuel cell, comprising an electrolyte membrane, a catalytic electrode layer, a microporous layer and a gas diffusion layer that are sequentially stacked, wherein the microporous layer has the microporous layer structure according to any one of claims 1 to 4 or the microporous layer structure prepared by the method according to any one of claims 5 to 7.

9. The membrane electrode assembly of a fuel cell according to claim 8, wherein the microporous layer having high water vapor permeability of the microporous layer structure is arranged on a side of the gas diffusion layer.

10. The membrane electrode assembly of a fuel cell according to claim 8, wherein the microporous layer comprises at least one layer.
